# EUROPÄISCHE PATENTSCHRIFT

(11) **EP 2 728 209 B1**
(45) Veröffentlichungstag und Bekanntmachung des Hinweises auf die Patenterteilung: **12.07.2017**
(21) Anmeldenummer: 12401223.8
(22) Anmeldetag: 08.11.2012
(51) Int. Cl.: F16B 25/00

(54) **Gewindeformende Schraube**
Thread forming screw
Vis autotaraudeuse

(30) Priorität: 05.11.2012 DE 102012110554
(43) Veröffentlichungstag der Anmeldung: 07.05.2014
(73) Patentinhaber: SG Holding UG, 30952 Ronnenberg (DE)
(72) Erfinder: Göttlich, Harald, 30900 Wedemark (DE)
(74) Vertreter: Scheffler, Jörg

(56) Entgegenhaltungen:
- EP-A1- 1 431 591
- EP-A1- 2 077 396
- EP-B1- 1 975 421
- DE-A1-102010 040 024
- DE-C- 52 742
- DE-U1- 7 915 444
- DE-U1-202007 015 912
- GB-A- 2 455 533

## Beschreibung

Die Erfindung betrifft eine gewindeformende Schraube zum direkten Einschrauben in einen insbesondere ortsfesten Festkörper, beispielsweise ein Bauwerk, wobei die Schraube einen Schraubenkopf mit einem Werkzeugangriff oder einem Gewindebolzenabschnitt, einen im Wesentlichen zylindrischen Schaft und einen dem Schraubenkopf abgewandten, zumindest abschnittsweise kegelförmigen, ein wesentlich verjüngtes Ende aufweisenden Endabschnitt umfasst, wobei die Schraube zumindest drei Gewindegänge mit einer im Wesentlichen übereinstimmenden Steigung aufweist, die sich helixförmig zumindest abschnittsweise über die Länge des Schafts erstrecken, wobei wenigstens zwei der Gewindegänge unterschiedliche Außendurchmesser aufweisen.

Derartige gewindeformende Schrauben werden in einen vorzugsweise mit einer Bohrung versehenen Festkörper aus Beton, Mauerwerk oder dergleichen eingeschraubt. Dabei schneidet sich ihr Gewindegang beispielsweise in Holzwerkstoffe ohne Vorbohren ein und ermöglicht so ein einfaches und zuverlässiges Befestigen von Bauteilen an dem Verankerungsgrund ohne Verwendung von Dübeln oder anderen Hilfsmitteln.

Die Eigenschaften des Gewindegangs bestimmen sowohl das Eindrehmoment, das erforderlich ist, um die Schraube in den Körper einzudrehen, das Lösedrehmoment, das erforderlich ist, um das Befestigungselement zu entfernen, als auch die Kraft, die einem Herausziehen des Befestigungselements widersteht, sobald es in Position ist. Demgegenüber begründet sich das Querlastverhalten im Wesentlichen aus dem Querschnitt, insbesondere der Querschnittsfläche, sowie dem Werkstoff.

Eine gattungsgemäße Schraube ist beispielsweise aus der EP 2 354 572 A1 bekannt, die einen Schraubenkopf für ein Werkzeug und eine kegelstumpfartig oder pyramidenstumpfartig verjüngte Spitze aufweist. Drei oder mehr Gewindegänge sind parallel zueinander ausgebildet, wobei der Außendurchmesser eines ersten Gewindegangs größer als der Außendurchmesser des jeweils entgegengesetzt der Setzrichtung dem ersten Gewindegang folgenden zweiten und dritten Gewindegangs ist. Unterschiedliche Abstände der drei Gewindegänge zueinander verbessern im Zusammenspiel mit den unterschiedlichen Außendurchmessern der Gewindegänge die Kraftübertragung von der Schraube auf den Verankerungsgrund. Um das Einschrauben der Schraube auch in einem nicht vorgebohrten Verankerungsgrund zu ermöglichen, erstreckt sich nur der erste Gewindegang bis zur kegelstumpfartig oder pyramidenstumpfartig verjüngten Spitze, weil sich dadurch die übrigen Gewindegänge in den Verankerungsgrund einschrauben lassen, ohne zu blockieren.

Eine ähnliche Schraube ist auch bereits durch die EP 1 431 591 A1 bekannt, bei der mehrere Gewindegänge auf dem Schaft parallel zueinander ausgebildet sind, wobei die drei Gewindegänge unterschiedliche Abstände zueinander aufweisen. Der Gewindegang hat mehrere Buckel, die durch Aussparungen voneinander getrennt sind. Die Buckel können entlang der gesamten Länge des Gewindegangs identisch sein oder sie können variieren, um die gewünschten Eigenschaften bereitzustellen. Bei mehreren Gewindegängen können Überlappungen zwischen den am Gewindegang vorgesehenen Buckeln vorgesehen werden, um ein allgemein gleichförmiges Drehmoment beim Einführen des Befestigungselements in einer Anwendung aufrechtzuerhalten. In den Aussparungen zwischen den Buckeln können sich bestimmte Materialien ansammeln, wie zum Beispiel Kaltflusskunststoffe, Gips oder Beton usw. Der Auslauf der Buckel kann so ausgebildet sein, dass er einen verbesserten Ausziehwiderstand bereitstellt.

Die EP 1 975 421 B1 bezieht sich auf eine Universalschraube, die in unterschiedlichen Materialien, wie beispielsweise Holz, Gasbeton, Mauerwerk und Beton, ohne Dübel fixierbar ist. Die dabei erreichbaren hohen Lastwerte beruhen darauf, dass anders als bei einer Dübel-Schraube-Verbindung, deren Fixierkraft auf Reibkräften zwischen Dübel und Material beruht, eine solche dübellose Schraube in das Material hineinschneidet, sodass keine im Wesentlichen reibschlüssige, sondern eine formschlüssige Verbindung entsteht.

Weitere bekannte Schrauben dieser Art sind in der EP 0 623 759 B1, der DE 299 17 000 U1, der DE 10 2005 017 596 A1, der DE 202 06 589 U1 und der GB 2 344 629 B offenbart.

Als nachteilig erweist sich bei dem Stand der Technik jedoch, dass sich in dem Nutengrund zwischen benachbarten Gewindegängen das beim Schneiden derselben in die Wandung der Ausnehmung abgetragene Material zwischen den Gewindegängen sammelt und dadurch die Wirksamkeit bei der Gewindeformung in dem Bohrloch wesentlich beeinträchtigt wird. Dabei kommt es aufgrund der unterschiedlichen Abstände zu einer ungleichen Lasteinleitung des Drehmoments, was zu einer unerwünschten Belastung der Schraube sowie zu wechselnden Drehmomentverläufen führt.

Darüber hinaus haben derartige Schrauben eine asymmetrisch über den Querschnitt verteilte Anordnung der Gewindegänge mit hoher Steigung. Dies führt beim Eindrehen ohne Vorbohren in einen weichen Werkstoff zu einer unerwünschten Taumelbewegung der Schraube, die das Eindrehen erschwert bzw. verhindert.

Der Erfindung liegt die Aufgabe zugrunde, eine Möglichkeit zu schaffen, einerseits das Einschraubverhalten und andererseits die Belastbarkeit der Schraube zu verbessern.

Diese Aufgabe wird erfindungsgemäß mit einer Schraube gemäß den Merkmalen des Anspruchs 1 gelöst. Die weitere Ausgestaltung der Erfindung ist den Unteransprüchen zu entnehmen.

Erfindungsgemäß ist also eine Schraube vorgesehen, bei der sich alle Gewindegänge jeweils zumindest abschnittsweise über die Länge des Schafts und zumindest abschnittsweise bis in den Endabschnitt erstrecken, insbesondere dort auslaufen, und bei der benachbarte Gewindegänge einen übereinstimmenden Abstand zueinander aufweisen. Die erfindungsgemäße Schraube eignet sich insbesondere für ortsfeste oder bewegliche Festkörper aus Beton, Mauerwerk, beispielsweise Ziegelstein oder Gasbeton, oder Holz. Darüber hinaus kann die Schraube aber in besonders bevorzugter Weise auch in metallische Werkstücke eingeschraubt werden. Ferner sind auch Anwendungen im medizinischen Bereich, beispielsweise als Knochenschraube, grundsätzlich realisierbar. Der gewünschte Effekt wird dabei durch die Kombination der symmetrischen Anordnung der Gewindegänge in Verbindung mit deren Erstreckung in den Bereich des Endabschnitts erreicht, wodurch insbesondere in texturierten Materialien ein ausreichender Abstand zwischen den Gewindegängen realisiert wird, welcher geeignet ist, Fasern aufzunehmen. Zugleich blockieren abgetrennte Festkörperpartikel und Abrieb weit weniger das Eindrehen der Schraube, sodass einerseits die Belastbarkeit, andererseits das Eindrehverhalten verbessert wird. Zu diesem Zweck sind die Gewindegänge über den Umfang annähernd gleichverteilt angeordnet, sodass die beim Eindrehen der Schraube in den Festkörper auf diesen wirkenden radialen Kräfte entlang des Umfangs im Wesentlichen konstant sind. Dabei könnten die Gewindegänge auf dem Endabschnitt enden oder auslaufen, sich beispielsweise stetig der Oberfläche des konischen Endabschnitts annähern. Der Schraubenkopf ist dabei entweder mit einem an sich bekannten Werkzeugangriff, beispielsweise einem Innensechskant, oder mit einem Gewindeabschnitt zur Aufnahme, beispielsweise einer Mutter ausgestattet. Weiter ist erfindungsgemäß vorgesehen, dass sich zumindest zwei Gewindegänge bis zum Ende des Endabschnitts erstrecken und zumindest ein Gewindegang mit einem Abstand zu der Spitze ausläuft. Hierdurch wird das Eindringen bzw. das Einfurchen der Schraube in den Festkörper wesentlich verbessert, indem sich alle Gewindegänge bis in den kegel- oder kegelstumpfartigen Endabschnitt erstrecken, jedoch nacheinander in das Werkstückmaterial eindringen. Die Belastbarkeit der Schraube wird dadurch bei zugleich reduzierten Montagekräften weiter verbessert. Dadurch wird ein Einschrauben der Schraube auch in einen nicht vorgebohrten Verankerungsgrund, vorzugsweise aus Holz, verbessert. Zusätzlich wird die Taumelbewegung der Schraube weitestgehend eliminiert. Die Schraube zieht sich hierbei problemlos in den Verankerungsgrund ein. Eine solche Anordnung stellt besonders sicher, dass die übrigen Gewindegänge sich ebenfalls in den Verankerungsgrund einschrauben lassen, ohne zu blockieren. Vorzugsweise ist jeder Gewindegang als Spitzgewinde ausgebildet.

Beim Eindrehen der Schraube greifen die Gewindegänge nacheinander in das Material des Festkörpers ein. Dabei hat es sich bereits als besonders praxisgerecht erwiesen, wenn der Gewindegang mit dem größten Außendurchmesser mit einem größeren Abstand zu der Spitze auf dem Endabschnitt ausläuft als die anderen Gewindegänge, wobei der Außendurchmesser eines Gewindegangs über den Gewindegrat gemessen wird. Auf diese Weise wird das Eindrehen der Schraube in den Festkörper weiter vereinfacht, weil zu Beginn des Einschraubvorgangs zunächst lediglich die Gewindegänge mit dem geringeren Durchmesser in Eingriff mit dem Festkörper kommen, sodass der erforderliche Abtrag vergleichsweise gering ist. Indem alle Gewindegänge auf dem Endabschnitt auslaufen, wird die Furchenbildung zunächst verhindert und die Spitze der Schraube wirkt wie eine Raspel. Eine Furchenbildung erfolgt dabei wesentlich später. Es kann vorteilhaft sein, wenn die Höhe der Gewindegänge des Schafts sowie des Endabschnitts bezogen auf die Oberfläche übereinstimmen.

Grundsätzlich könnten alle Gewindegänge unterschiedlich ausgeführt sein, insbesondere also unterschiedliche Durchmesser aufweisen. Als besonders zweckmäßig hat sich bereits eine Abwandlung der vorliegenden Erfindung erwiesen, bei welcher ein Gewindegang größer als die übrigen Gewindegänge ist, die übrigen Gewindegänge einen übereinstimmenden Außendurchmesser aufweisen und der Flankenwinkel der Gewindegänge übereinstimmt. Dies hat sich als günstig für eine hohe Haltekraft der Schraube im festen Verankerungsgrund herausgestellt. Zudem lässt sich die Schraube besonders einfach in einen nicht vorgebohrten Verankerungsgrund, vorzugsweise in Holz einschrauben. Als besonders günstig haben sich für die Gewindegänge Flankenwinkel bis 45°, vorzugsweise von 8° bis 31°, besonders bevorzugt von 16° bis 30° herausgestellt.

Vorzugsweise weist jeder Gewindegang entlang der Haupterstreckung des Schafts einen konstanten Außendurchmesser auf, sodass die Fixierkraft der Schraube in dem Festkörper über die Länge der Schraube gleichmäßig verteilt ist.

Der Endabschnitt ist kegelförmig ausgeformt, sodass die Schraube problemlos in eine als Bohrung ausgeführte Ausnehmung in dem Festkörper einschraubbar ist. Erfindungsgemäß ist die Ausformung, bei welcher der Endabschnitt kegelförmig und das Ende als Kegelspitze ausgeführt ist, um so das Eindrehen der Schraube auch in nicht vorgebohrte Gegenstände wesentlich zu vereinfachen. Weiterhin hat sich auch eine Weiterbildung als Erfolg versprechend erwiesen, bei welcher der jeweilige Kerndurchmesser des Schafts zwischen den Gewindegängen in Richtung der Mittelachse des Schafts konstant ist und dabei insbesondere auf eine Absenkung verzichtet wird. Bei einem unveränderten Eindrehmoment kann dadurch das Querlastverhalten wesentlich verbessert werden. Hierzu weist die Querschnittsfläche des Schafts zwischen dem Schraubenkopf und dem Endabschnitt eine konstante Größe auf

Die erfindungsgemäße Schraube lässt sich gleichermaßen bei vorgebohrten als auch bei nicht vorgebohrten Gegenständen einsetzen. Im letzteren Fall ist es besonders vorteilhaft, wenn die Schraube selbstschneidend ausgeführt und daher in der Praxis in besonders einfacher Weise universell einsetzbar ist. Dabei graben oder furchen die Gewindegänge beim Einschrauben der Schraube in dem Festkörper bzw. in der Wandung der Bohrung. Hierzu erfolgt die Auswahl der Schraubendimension derart, dass der Durchmesser der Bohrung kleiner als der Außendurchmesser des kleinsten Gewindegangs ist, sodass sich auch der Gewindegang mit dem kleinsten Außendurchmesser in die Wandung der Bohrung einschneidet und zum Halt der Schraube im festen Verankerungsgrund beiträgt.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Seitenansicht einer erfindungsgemäßen Schraube;
- Fig. 2: eine entlang der Linie A-A geschnittene Querschnittsdarstellung eines Schafts der in Figur 1 gezeigten Schraube;
- Fig. 3: eine entlang der Linie B-B längs geschnittene Darstellung des Schafts.

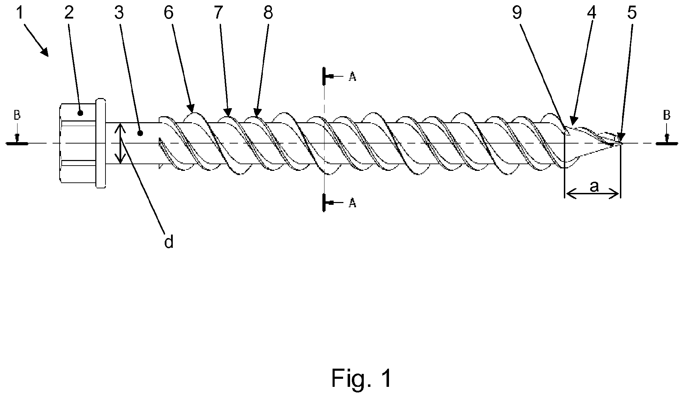

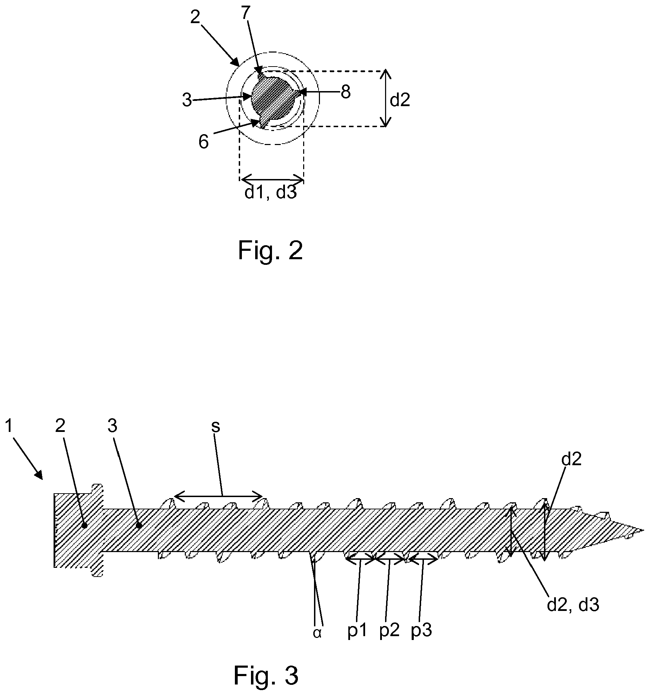

Die erfindungsgemäße Schraube 1 wird nachstehend anhand der Figuren 1 bis 3 näher erläutert. Die Schraube 1 ist als eine gewindeformende Universalschraube beispielsweise zum Einschrauben in eine nicht gezeigte Bohrung in einen festen Verankerungsgrund oder in einen nicht vorgebohrten Verankerungsgrund eines Festkörpers vorgesehen. Wesentlich für den praktischen Einsatz ist die Verwendung der Schraube 1 ohne einen Dübel, wodurch die praktische Handhabung wesentlich erleichtert ist. In dem dargestellten Ausführungsbeispiel ist die Schraube 1 mit einem Schraubenkopf 2 mit einem polygonalen Werkzeugangriff, einem im Wesentlichen zylindrischen Schaft 3 und einem dem Schraubenkopf 2 abgewandten, kegelförmigen Endabschnitt 4 mit einem spitz zulaufenden Ende 5 ausgestattet, der zugleich eine Führung für die Schraube 1 beim Eindrehen in den Festkörper bildet. Die Schraube 1 hat drei Gewindegänge 6, 7, 8, die parallel zueinander ausgebildet sind und sich helixförmig über die Länge des Schafts 3 erstrecken. Der Außendurchmesser d1 des ersten Gewindegangs 6 ist größer als die übereinstimmenden Außendurchmesser d2 und d3 der übrigen Gewindegänge 7, 8. Weiterhin sind die Gewindegänge 6, 7, 8 über den Umfang gleichverteilt angeordnet, wie insbesondere aus der Querschnittsdarstellung in Figur 2 ersichtlich ist, sodass auch der Abstand p1, p2 und p3 aller Gewindegänge 6, 7, 8 zu den jeweils benachbarten Gewindegängen 6, 7, 8 übereinstimmt. Alle Gewindegänge 6, 7, 8 erstrecken sich bis in den Endabschnitt 4 und laufen dort jeweils mit einer Schrägfläche 9 aus. Durch die gleichmäßigen Abstände p1, p2 und p3 wird zwischen den Gewindegängen 6, 7, 8 ein ausreichend großer Abstand p1, p2 und p3 sichergestellt, welcher geeignet ist, Fasern oder Festkörperpartikel aufzunehmen, um einen unerwünscht hohen Widerstand beim Eindrehen der Schraube 1 zu vermeiden. Wie zu erkennen, erstrecken sich die beiden Gewindegänge 7, 8 mit den kleineren Außendurchmessern d2, d3 bis annähernd zu der Spitze des Endabschnitts 4, während demgegenüber der Gewindegang 6 mit dem größeren Außendurchmesser d1 mit einem größeren Abstand a zu der Spitze auf dem Endabschnitt 4 ausläuft, insbesondere benachbart zu dem zylindrischen Schaft 3 auf dem Endabschnitt 4 endet. Dadurch lässt sich die erfindungsgemäße gewindeformende Schraube 1 auch ohne Weiteres in einen nicht vorgebohrten Verankerungsgrund, insbesondere aus Verbundwerkstoffen, einschrauben. Die Schraube 1 zieht sich hierbei problemlos in den Verankerungsgrund ein, ohne dass der größere Gewindegang 6 blockiert. Die Steigung s der Schraube 1 ist der Abstand von einer Windung eines Gewindegangs 6, 7, 8 bis zur folgenden Windung desselben Gewindegangs 6, 7, 8, also die Summe der Abstände p1, p2 und p3 der Gewindegänge 6, 7, 8 voneinander, wobei die Steigung s mindestens doppelt so groß ist wie der Kerndurchmesser d des Schafts 3. Die Gewindegänge 6, 7, 8 sind als Spitzgewinde ausgebildet und weisen einen im Wesentlichen übereinstimmenden Flankenwinkel α auf.

## Patentansprüche

1. Gewindeformende Schraube (1) zum direkten Einschrauben in einen insbesondere ortsfesten Festkörper, wobei die Schraube (1) einen Schraubenkopf (2), einen im Wesentlichen zylindrischen Schaft (3) und einen dem Schraubenkopf (2) abgewandten, kegelförmigen, ein wesentlich verjüngtes Ende (5) aufweisenden Endabschnitt (4) umfasst, wobei die Schraube (1) zumindest drei Gewindegänge (6, 7, 8) mit einer zumindest abschnittsweise übereinstimmenden Steigung (s) aufweist, die sich helixförmig zumindest abschnittsweise über die Länge des Schafts (3) erstrecken, wobei wenigstens zwei der Gewindegänge (6, 7, 8) unterschiedliche Außendurchmesser (d1, d2, d3) aufweisen, wobei sich alle Gewindegänge (6, 7, 8) jeweils zumindest abschnittsweise über die Länge des Schafts (3) erstrecken, **dadurch gekennzeichnet, dass** benachbarte Gewindegänge (6, 7, 8) einen übereinstimmenden Abstand (p1, p2, p3) zueinander aufweisen und dass sich alle Gewindegänge (6, 7, 8) bis in den kegelförmigen Endabschnitt (4) erstrecken und dass sich zumindest ein Gewindegang (7, 8) bis zum Ende (5) des Endabschnitts (4) erstreckt und zumindest ein Gewindegang (6) mit einem Abstand (a) zu dem Ende (5) endet, wobei das Ende (5) als Kegelspitze ausgeführt ist.

2. Schraube (1) nach Anspruch 1, **dadurch gekennzeichnet, dass** der Gewindegang (6) mit dem größten Außendurchmesser (d1) mit einem größeren Abstand (a) zu dem Ende (5) auf dem Endabschnitt (4) ausläuft als die anderen Gewindegänge (7, 8).

3. Schraube (1) nach zumindest einem der vorhergehenden Ansprüche, **dadurch gekennzeichnet, dass** ein Gewindegang (6) einen größeren Außendurchmesser (d1) als die übrigen Gewindegänge (7, 8) hat und die übrigen Gewindegänge (7, 8) einen übereinstimmenden Außendurchmesser (d2, d3) aufweisen.

4. Schraube (1) nach zumindest einem der vorhergehenden Ansprüche, **dadurch gekennzeichnet, dass** der Flankenwinkel (α) der Gewindegänge (6, 7, 8) übereinstimmt.

5. Schraube (1) nach zumindest einem der vorhergehenden Ansprüche, **dadurch gekennzeichnet, dass** jeder der Gewindegänge (6, 7, 8) entlang der Haupterstreckung des Schafts (3) einen konstanten Außendurchmesser (d1, d2, d3) aufweist.

6. Schraube (1) nach zumindest einem der vorhergehenden Ansprüche, **dadurch gekennzeichnet, dass** der jeweilige Kerndurchmesser (d) des Schafts (3) zwischen den Gewindegängen (6, 7, 8) im Verlauf des Schafts (3) zwischen dem Schraubenkopf (2) und dem Endabschnitt (4) konstant ist.

7. Schraube (1) nach zumindest einem der vorhergehenden Ansprüche, **dadurch gekennzeichnet, dass** die Schraube (1) selbstschneidend ausgeführt ist.

## Claims

1. Thread forming screw (1) for screwing directly into an in particular stationary solid body, wherein the screw (1) comprises a screw head (2), a substantially cylindrical shank (3) and a conical end portion (4) that is remote from the screw head (2) and has a substantially tapered end (5), wherein the screw (1) has at least three threads (6, 7, 8) with an at least partially matching pitch (s) which extend helically at least partially along the length of the shank (3), wherein at least two of the threads (6, 7, 8) have different outside diameters (d1, d2, d3), wherein all of the threads (6, 7, 8) each extend at least partially along the length of the shank (3), **characterized in that** adjacent threads (6, 7, 8) are at a matching spacing (p1, p2, p3) from one another, and **in that** all of the threads (6, 7, 8) extend right into the conical end portion (4), and **in that** at least one thread (7, 8) extends as far as the end (5) of the end portion (4) and at least one thread (6) ends at a distance (a) from the end (5), wherein the end (5) is embodied as a cone tip.

2. Screw (1) according to Claim 1, **characterized in that** the thread (6) having the greatest outside diameter (d1) ends at a greater distance (a) from the end (5) on the end portion (4) than the other threads (7, 8).

3. Screw (1) according to at least either of the preceding claims, **characterized in that** one thread (6) has a greater outside diameter (d1) than the other threads (7, 8) and the other threads (7, 8) have a matching outside diameter (d2, d3).

4. Screw (1) according to at least one of the preceding claims, **characterized in that** the flank angle (α) of the threads (6, 7, 8) matches.

5. Screw (1) according to at least one of the preceding claims, **characterized in that** each of the threads (6, 7, 8) has a constant outside diameter (d1, d2, d3) along the main extent of the shank (3).

6. Screw (1) according to at least one of the preceding claims, **characterized in that** the respective core diameter (d) of the shank (3) between the threads (6, 7, 8) is constant along the course of the shank (3) between the screw head (2) and the end portion (4).

7. Screw (1) according to at least one of the preceding claims, **characterized in that** the screw (1) is embodied in a self-tapping manner.

## Revendications

1. Vis autotaraudeuse (1) pour le vissage direct dans un corps solide notamment fixe, la vis (1) comprenant une tête de vis (2), une tige essentiellement cylindrique (3) et une portion d'extrémité (4) opposée à la tête de vis (2), de forme conique, présentant une extrémité (5) sensiblement rétrécie, la vis (1) présentant au moins trois filets de vis (6, 7, 8) avec un pas (s) au moins partiellement coïncidents, qui s'étendent en forme d'hélice au moins en partie sur la longueur de la tige (3), au moins deux des filets de vis (6, 7, 8) présentant un diamètre extérieur différent (d1, d2, d3), tous les filets de vis (6, 7, 8) s'étendant à chaque fois au moins en partie sur la longueur de la tige (3), **caractérisée en ce que** les filets de vis adjacents (6, 7, 8) présentent un espacement coïncident (p1, p2, p3) les uns aux autres et **en ce que** tous les filets de vis (6, 7, 8) s'étendent jusque dans la portion d'extrémité de forme conique (4) et **en ce qu'**au moins un filet de vis (7, 8) s'étend jusqu'à l'extrémité (5) de la portion d'extrémité (4) et au moins un filet de vis (6) se termine à une distance (a) de l'extrémité (5), l'extrémité (5) étant réalisée sous forme de pointe conique.

2. Vis (1) selon la revendication 1, **caractérisée en ce que** le filet de vis (6) avec le plus grand diamètre extérieur (d1) se termine avec une plus grande distance (a) de l'extrémité (5) sur la portion d'extrémité (4) que les autres filets de vis (7, 8).

3. Vis (1) selon au moins l'une quelconque des revendications précédentes, **caractérisée en ce qu'**un filet de vis (6) a un plus grand diamètre extérieur (d1) que les autres filets de vis (7, 8) et les autres filets de vis (7, 8) présentent un diamètre extérieur coïncident (d2, d3).

4. Vis (1) selon au moins l'une quelconque des revendications précédentes, **caractérisée en ce que** l'angle de flan (α) des filets de vis (6, 7, 8) est coïncident.

5. Vis (1) selon au moins l'une quelconque des revendications précédentes, **caractérisée en ce que** chacun des filets de vis (6, 7, 8) présente le long de l'étendue principale de la tige (3) un diamètre extérieur constant (d1, d2, d3).

6. Vis (1) selon au moins l'une quelconque des revendications précédentes, **caractérisée en ce que** le diamètre de coeur respectif (d) de la tige (3) entre les filets de vis (6, 7, 8) dans l'étendue de la tige (3) entre la tête de vis (2) et la portion d'extrémité (4) est constant.

7. Vis (1) selon au moins l'une quelconque des revendications précédentes, **caractérisée en ce que** la vis (1) est réalisée de manière autotaraudeuse.
